# EUROPÄISCHE PATENTSCHRIFT

(11) **EP 1 149 797 B1**
(45) Veröffentlichungstag und Bekanntmachung des Hinweises auf die Patenterteilung: **16.03.2005**
(21) Anmeldenummer: 01109220.2
(22) Anmeldetag: 14.04.2001
(51) Int. Cl.: B66D 5/14

(54) **Scheibenbremse für Aufzugsantrieb**
Disk brake for lift drive
Frein à disque pour ascenseur

(30) Priorität: 27.04.2000 EP 00810361
(43) Veröffentlichungstag der Anmeldung: 31.10.2001
(73) Patentinhaber: INVENTIO AG, CH-6052 Hergiswil (CH)
(72) Erfinder: Rimann, André, Ing. ETH, 5452 Oberrohrdorf (CH); Murer, Renate, 6044 Udligenswil (CH)

(56) Entgegenhaltungen:
- DE-A- 19 609 764
- GB-A- 859 527
- GB-A- 1 017 561
- US-A- 5 957 247
- PATENT ABSTRACTS OF JAPAN vol. 1999, no. 03, 31. März 1999 (1999-03-31) -& JP 10 331885 A (HITACHI BUILDING SYST CO LTD), 15. Dezember 1998 (1998-12-15)

## Beschreibung

Die Erfindung betrifft eine Scheibenbremse für einen Aufzugsantrieb, gemäß dem Oberbegriff des Anspruchs 1.

Aus der Patentschrift EP 0 535 344 ist eine Scheibenbremse bekannt geworden, die an einer Bremsscheibe eines Aufzugsantriebes angreift, wobei die symmetrisch aufgebaute Scheibenbremse den Aufzugsantrieb stillsetzt. An einem festen Trägerwinkel sind zwei Bremshebel angelenkt. Jeder Bremshebel ist zweiarmig, wobei am einen Ende des Bremshebels ein Bremsschuh angeordnet ist, dessen Bremsbelag im Bremsfall auf die Bremsscheibe einwirkt. Am anderen Ende des Bremshebels greift eine Druckfeder an, die sich an einem Anschlag und am Bremshebel abstützt. Die Druckfeder des zweiten Bremshebels stützt sich ebenfalls am Anschlag ab, wobei der Anschlag verschiebbar in einem Bremsmagnet gelagert ist. Falls sich der Anschlag beispielsweise durch Bruch einer Druckfeder verschiebt, erzeugt ein Sensor ein Alarmsignal. Zum Lüften der Scheibenbremse wird der mit einer Ankerplatte versehene Bremsmagnet aktiviert, wobei der Bremsmagnet mit der Ankerplatte entgegen der Kraft der Druckfedern wirkt.

Ein Nachteil der bekannten Einrichtung liegt darin, dass die Scheibenbremse mit dem mittig angeordneten Bremsmagneten relativ breit bauend ist und daher nicht für knappe Platzverhältnisse geeignet ist.

Dieser Nachteil ist bei der aus GB-A-1 017 561 bekannten und die Gattung des Anspruchs 1 bildenden Scheibenbremse überwunden.

Die Erfindung, wie sie in Anspruch 1 gekennzeichnet ist, löst die Aufgabe, die Nachteile der bekannten Einrichtung zu vermeiden und einen Aufzugsantrieb mit einer schlank bauenden Scheibenbremse zu schaffen, die auch manuell leicht lösbar ist.

Die durch die Erfindung erreichten Vorteile sind im wesentlichen darin zu sehen, dass der Aufzugsantrieb modular aufbaubar ist. Die Elemente der symmetrisch aufgebauten Bremseinrichtung sind ausserhalb des Motorbereichs angeordnet. Der Motor ist so leicht zugänglich und leicht austauschbar. Die Elemente der Bremseinrichtung sind einfach aufgebaut und in der Herstellung kostengünstig. Die Bremseinrichtung ist redundant und funktioniert auch mit einem Bremshebel. Die einarmigen Bremshebel ermöglichen eine kleinere Bauhöhe des Aufzugsantriebes. Ausserdem ist die Bremseinrichtung manuell mit kleiner Kraft, beispielsweise mittels eines Bowdenzuges fernbedienbar. Die Elemente der Bremseinrichtung sind gut zugänglich und leicht austauschbar. Zur Demontage müssen lediglich die Druckfedern entfernt werden. Die Bremseinrichtung kann dann nach oben entfernt werden. Die Wartung (Kontrolle der Bremsbeläge, des Magnetluftspaltes, der Parallelität zwischen Bremsmagnet und Ankerplatte sowie der Federvorspannung) wird durch die erfindungsgemässe Bremseinrichtung vereinfacht. Weil die Bremseinrichtung direkt auf die Treibscheibe wirkt, kann die Bremseinrichtung als Schutzeinrichtung gegen Übergeschwindigkeiten in Aufwärtsrichtung der Aufzugskabine eingesetzt werden.

Anhand der beiliegenden Figuren wird die vorliegende Erfindung näher erläutert.

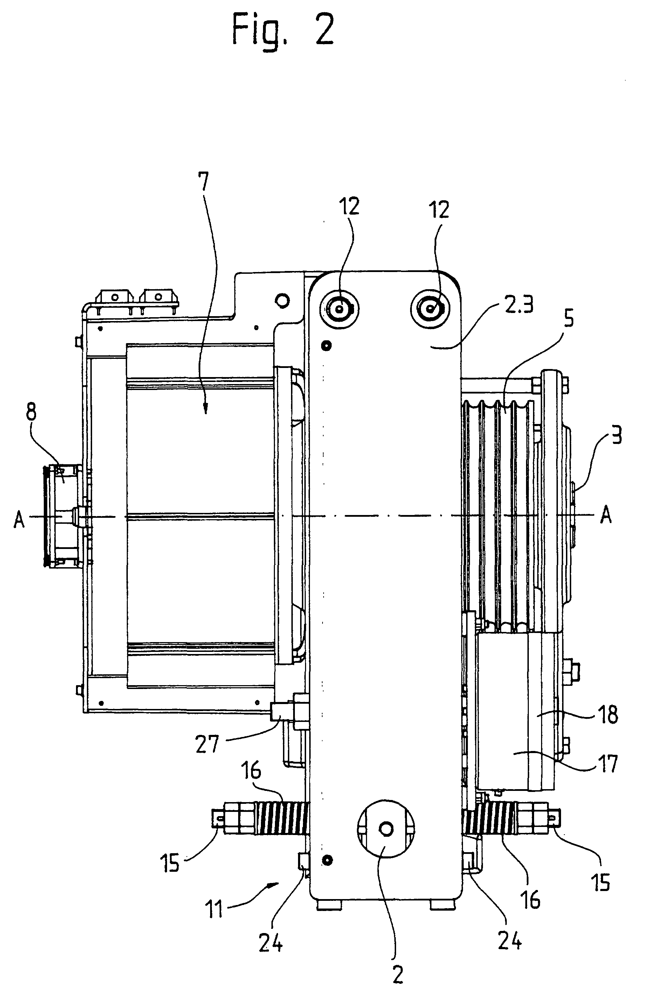

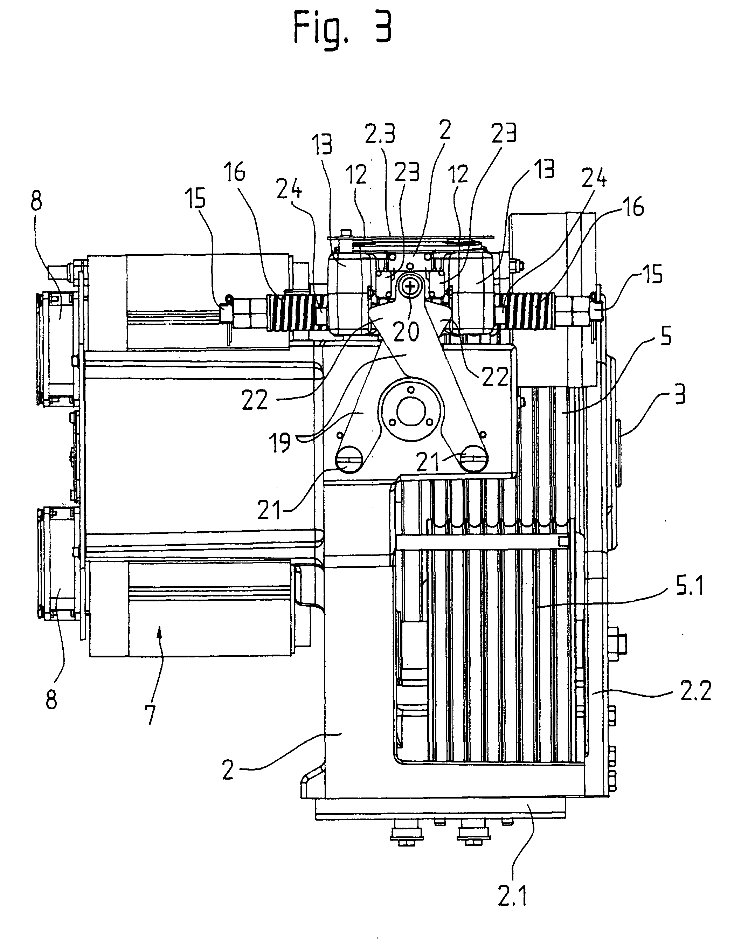

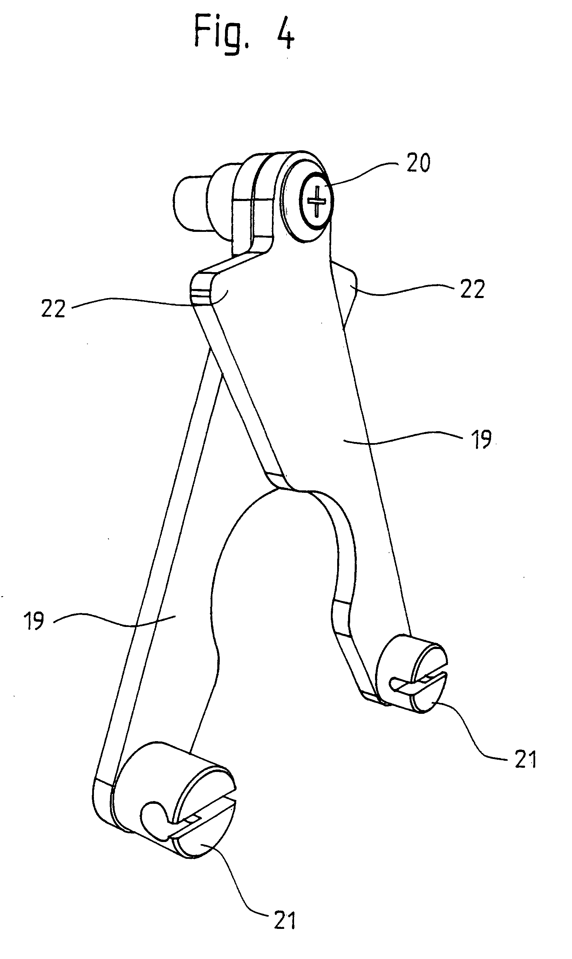

Es zeigen:
Fig. 1
   einen Schnitt entlang der Linie A-A der Fig. 2 durch den Aufzugsantrieb mit der erfindungsgemässen Bremseineinrichtung,
Fig. 2
   einen Grundriss des Aufzugsantriebes mit der Bremseinrichtung,
Fig. 3
   einen Seitenriss des Aufzugsantriebes mit der Bremseinrichtung,
Fig. 4
   Einzelheiten von Nockenhebeln zur manuellen Fernbedienung der Bremseinrichtung,
Fig. 5
   eine räumliche Darstellung der Bremseinrichtung und
Fig. 6
   einen Schnitt durch einen Bremsmagneten zur magnetischen Fernbedienung der Bremseinrichtung.

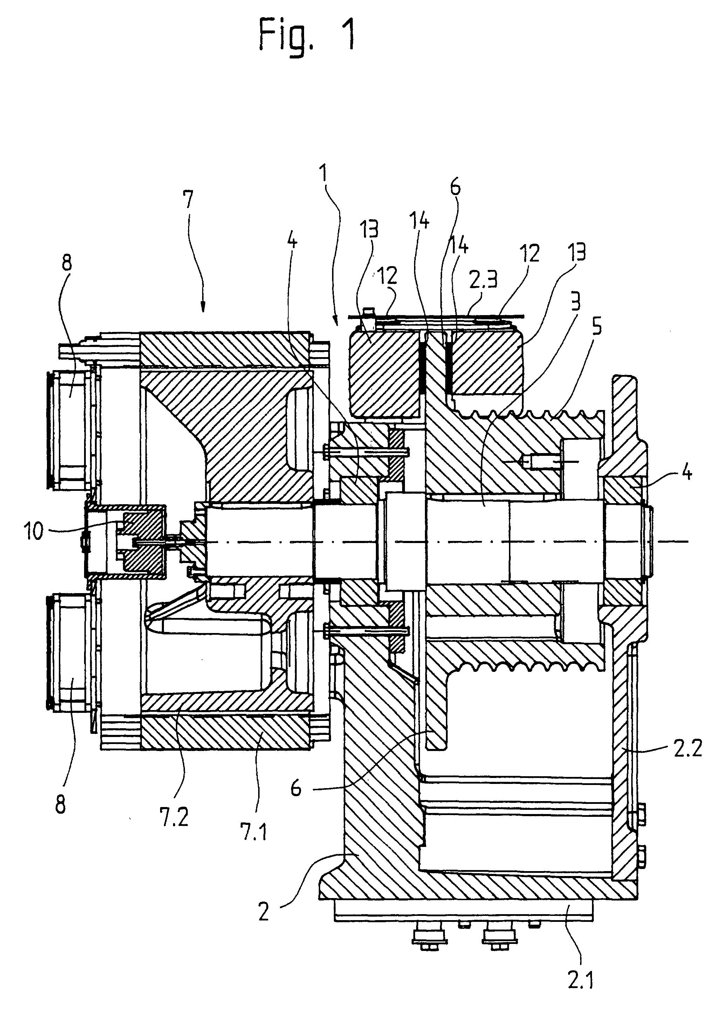

Fig. 1 zeigt einen Aufzugsantrieb 1 bestehend aus einem Gehäuse 2 mit einem als Dämpfungselement dienender Sockel 2.1 und Schild 2.2. Am Gehäuse 2 und Schild 2.2 ist eine Welle 3 gelagert, wobei ein Teil der Welle 3 als freies Ende aus dem Gehäuse ragt. An der Welle 3 zwischen den Wellenlagern 4 angeordnet sind eine Treibscheibe 5 und eine Bremsscheibe 6. Über die Treibscheibe 5 und eine Ablenkscheibe 5.1 sind nicht dargestellte Seile geführt, die eine nicht dargestellte Aufzugskabine und ein nicht dargestelltes Gegengewicht antreiben und halten. Am freien Ende der Welle 3 ist ein Motor 7 mit Stator 7.1 und Rotor 7.2 angeordnet, wobei der Motor 7 mittels Ventilatoren 8 belüftbar ist. Am motorseitigen Ende der Welle 3 ist ein Drehzahlsensor 10 vorgesehen. Die Bremsscheibe 6 ist zum Stillsetzen der Welle 3 und somit zum Stillsetzen der Treibscheibe 5 vorgesehen.

Am Gehäuse 2 angeordnet ist eine symmetrisch aufgebaute Bremseinrichtung 11, die mittels einer Abdeckung 2.3 geschützt ist. Am Gehäuse 2 mittels Bolzen 12 angelenkt sind zwei einarmige Bremshebel 13 mit Bremsbelägen 14, die im Bremsfall an der Treibscheibe 5 angreifen und diese stillsetzen. Die Bolzen 12 dienen als Drehachse der Bremshebel 13. Am freien Ende des Bremshebels 13 durchdringt ein Federbolzen 15 den Bremshebel 13 und ist am Gehäuse 2 angeordnet. Der Federbolzen 15 dient als Führung für eine Druckfeder 16, die sich einenends am Bremshebel 13 und anderenends am Federbolzen 15 abstützt. Die Druckfeder 16 beaufschlagt den Bremshebel 13 mit ihrer Federkraft, wobei der Bremsbelag 14 an der Treibscheibe 5 angreift. Zum Lösen der Bremshebel 13 ist ein am einen Bremshebel 13 angeordneter Bremsmagnet 17 mit Ankerplatte 18 vorgesehen, wobei Bremsmagnet 17 und Ankerplatte 18 entgegen der Kraft der Druckfedern 16 wirken.

Die Bremseinrichtung 11 ist manuell mit kleiner Kraft, beispielsweise mittels eines Bowdenzuges vom Stockwerk aus fernbedienbar. Dazu sind am Aufzugsantrieb 1 stirnseitig der Bremshebel 13 zwei Nockenhebel 19 vorgesehen, die entgegen der Kraft der Druckfedern 16 auf die Bremshebel 13 einwirken und die Bremshebel 13 lösen. Ein am Gehäuse 2 angeordneter Bolzen 20 dient als Drehachse für beide Nockenhebel 19. Am freien Ende des Nockenhebels 19 ist ein Bolzen 21 angeordnet, an dem beispielsweise der Bowdenzug angreift und die Bolzen 21 gegeneinander bewegt. Dabei wirkt eine Nocke 22 des Nockenhebels 19 entgegen der Kraft der Druckfeder 16 auf eine Anschlagfläche 28 des Bremshebels 13 ein und die Bremsbeläge 14 werden von der Bremsscheibe 6 gelöst. Zur Überwachung der Stellung der Bremshebel 13 ist je Bremshebel 13 beispielsweise ein Mikroschalter 23 vorgesehen.

Die an der gemeinsamen Drehachse 20 angeordneten Nockenhebel 19 mit den Nocken 22 wirken als Kraftübersetzer zwischen dem Bowdenzug und den Druckfedern 16. Mit einer kleinen Kraft am Bowdenzug kann der grossen Kraft der Druckfedern 16 entgegengewirkt werden. Die manuelle Fernbedienung mit Kraftübersetzung kann beispielsweise auch auf Bremseinrichtungen mit zweiarmigen Bremshebeln angewendet werden.

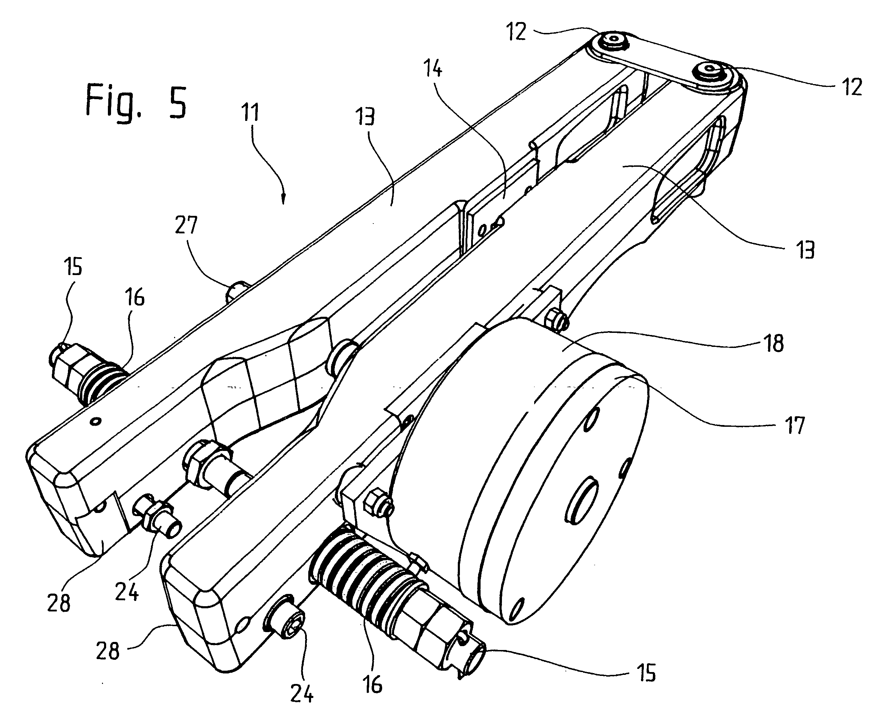

Fig. 5 zeigt die Bremseinrichtung 11 ohne die Nockenhebel 19. Zwei unabhängige Bremshälften bestehend aus je einem Bremshebel 13 mit Bremsbelag 14, dem Bolzen 12, der Druckfeder 16, des am Gehäuse 2 angeordneten Federbolzens 15 und einer Justierschraube 24. In Fig. 5 ist der Gehäuseteil 2, an dem die Federbolzen 15 angeordnet sind und an dem sich die Justierschrauben 24 abstützen, nicht dargestellt. Zum Lösen der Bremsbeläge 14 wirkt der Bremsmagnet 17 zusammen mit der Ankerplatte 18 auf dem Aktions-/Reaktionsprinzip gleichzeitig auf beide Bremshebel 13 ein. Um zu verhindern, dass nur ein Bremshebel 13 öffnet, ist die Bewegung eines jeden Bremshebels 13 mittels der Justierschraube 24 begrenzt und einstellbar.

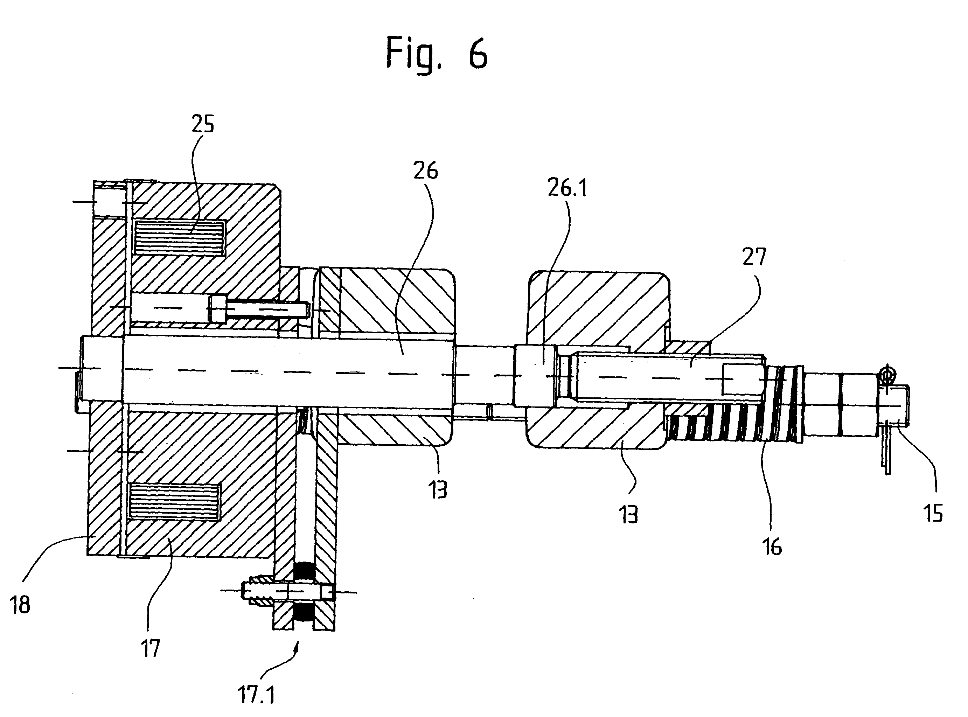

Fig. 6 zeigt einen Schnitt durch den Bremsmagneten 17 und die Ankerplatte 18. Der Bremsmagnet 17 ist am einen Bremshebel 13 angeordnet. Die Ankerplatte 18 ist gegenüber dem Bremsmagneten 17 beweglich. Mittels einer Magnetkraft, erzeugt durch eine mittels der Aufzugssteuerung elektrisch fernbedienbaren Spule 25, wird die Ankerplatte 18 zum Bremsmagneten 17 hin bewegt. Ein an der Ankerplatte 18 angeordneter Stössel 26 durchdringt den Bremsmagneten 17 und den einen Bremshebel 13 und endet im anderen Bremshebel 13, wobei der Stössel 26 mittels eines Gleitlagers 26.1 mit einer Justierschraube 27 verbunden ist, die mit dem anderen Bremshebel 13 verbunden ist. Mit der Justierschraube 27 wird der Hub der Ankerplatte 18 begrenzt. Die Parallelität zwischen dem Bremsmagnet 17 und der Ankerplatte 18 kann mittels einer Justiervorrichtung 17.1 bestehend aus Schraube, Mutter und Gummielement eingestellt werden.

## Patentansprüche

1. Scheibenbremse für einen Aufzugsantrieb, bestehend aus einer Bremsscheibe (6), Bremshebeln (13) mit Bremsbelägen (14), Druckfedern (16) sowie aus einem Bremsmagneten (17), wobei je Seite der Bremsscheibe (6) ein einarmiger Bremshebel (13) mit Bremsbelag (14) vorgesehen ist, wobei der Bremsbelag (14) des Bremshebels (13) zwischen der Drehachse (12) des Bremshebels (13) und der Druckfeder (16) angeordnet ist, wobei die mit der Kraft der Druckfedern (16) beaufschlagten Bremshebel (13) mittels der Bremsbeläge (14) auf die Bremsscheibe (6) einwirken und den Aufzugsantrieb stillsetzen und wobei zum Lösen der Bremshebel (13) der Bremsmagnet (17) entgegen der Kraft der Druckfedern (16) auf die Bremshebel (13) einwirkt,
**dadurch gekennzeichnet, dass** zum Lösen der Bremshebel (13) je Bremshebel (13) ein manuell fernbetätigbarer Nockenhebel (19) vorgesehen ist, die Nockenhebel (19) um eine gemeinsame Drehachse (20) bewegbar angeordnet sind und dabei die Bremshebel (13) entgegen der Kraft der Druckfeder (16) betätigbar sind.

2. Scheibenbremse nach Anspruch 1,
**dadurch gekennzeichnet,**
**dass** der Nockenhebel (19) einen Nocken (22) aufweist, der bei Betätigung des Nockenhebels (19) gegen eine Anschlagfläche (28) des Bremshebels (13) stösst und den Bremshebel (13) entgegen der Kraft der Druckfeder (16) löst.

3. Scheibenbremse nach Anspruch 2
**dadurch gekennzeichnet,**
**dass** je Nockenhebel (19) ein Bolzen (21) vorgesehen ist, an denen ein Bowdenzug angreift.

## Claims

1. Disk brake for an elevator drive, comprising a brake disk (6), brake levers (13) with brake linings (14), compression springs (16), and a brake magnet (17), there being provided on each side of the brake disk (6) a single-arm brake lever (13) with a brake lining (14), the brake lining (14) of the brake lever (13) being arranged between the fulcrum (12) of the brake lever (13) and the compression spring (16), the brake levers (13) being caused by the force of the compression springs (16) to act through the brake linings (14) on the brake disk (6) and bring the elevator drive to a standstill, and the brake levers (13) being released by the brake magnet (17) acting on the brake levers (13) against the force of the compression springs (16),
**characterized in that**
to release the brake levers (13), for each brake lever (13) a manually remotely actuatable cam lever (19) is provided, the cam levers (19) are arranged movably about a common fulcrum (20), and the brake levers (13) are actuatable against the force of the compression spring (16).

2. Disk brake according to Claim 1,
**characterized in that**
the cam lever (19) has a cam (22) which, when the cam lever (19) is actuated, pushes against a contact surface (28) of the brake lever (13) and releases the brake lever (13) against the force of the compression spring (16).

3. Disk brake according to Claim 2,
**characterized in that**
on each cam lever (19) a pin (21) is provided on which a Bowden cable acts.

## Revendications

1. Frein à disque pour un mécanisme de commande d'ascenseur se composant d'un disque à frein (6), de leviers du frein (13) avec garnitures de frein (14), de ressorts de pression (16) ainsi que d'un aimant-frein (17), auquel cas de chaque côté du disque à frein (6) un levier du frein (13) du type à bras unique avec garniture de frein (14) est prévu, auquel cas la garniture de frein (14) du levier du frein (13) est placée entre l'axe de rotation (12) du levier du frein (13) et les ressorts de pression (16), auquel cas les leviers du frein (13) chargés par la force des ressorts de pression (16) agissent à l'aide des garnitures de frein (14) sur le disque à frein (6) et arrêtent le mécanisme de commande d'ascenseur et auquel cas, pour relâcher les leviers du frein (13), l'aimant-frein (17) agit contre la force du ressort de pression (16) sur les leviers du frein (13), **caractérisé par le fait que** pour relâcher les leviers du frein (13), un levier à came 19 susceptible d'être commandé à distance manuellement est prévu pour chaque levier du frein (13), ces leviers de came (19) étant disposés de façon à pivoter autour d'un axe de rotation (20) commun et cependant les leviers du frein (13) sont susceptibles d'être actionnés contrairement à la force du ressort de pression (16).

2. Frein à disque selon la revendication 1, **caractérisé par le fait que** le levier à came (19) présente une came (22) qui pousse, lors de l'actionnement du levier à came (19), contre une surface d'arrêt (28) du levier du frein (13) et relâche le levier du frein (13) contrairement à la force du ressort de pression (16).

3. Frein à disque selon la revendication 2, **caractérisé par le fait que** un boulon (21) est prévu pour chaque levier à came (19), auxquels un câble Bowden est appliqué.
